# EUROPÄISCHE PATENTSCHRIFT

(11) **EP 0 985 836 B1**
(45) Veröffentlichungstag und Bekanntmachung des Hinweises auf die Patenterteilung: **08.04.2009**
(21) Anmeldenummer: 99117608.2
(22) Anmeldetag: 07.09.1999
(51) Int. Cl.: F16C 3/02

(54) **Gelenkwelle für Kraftfahrzeuge und Verfahren zur Herstellung einer Gelenkwelle**
Articulated shaft for automotive vehicles and method of producing an articulated shaft
Arbre articulé pour véhicules automobiles et procédé de fabrication d'un arbre articulé

(30) Priorität: 09.09.1998 DE 19841139
(43) Veröffentlichungstag der Anmeldung: 15.03.2000
(73) Patentinhaber: Hydro Aluminium Alutubes GmbH, 30453 Hannover (DE); Bayerische Motoren Werke Aktiengesellschaft, 80809 München (DE)
(72) Erfinder: Steimmel, Franz, 30974 Wennigsen (DE); Schulze, Thorsten, 31515 Wunstorf (DE); Günther, Bernd, 85748 Garching (DE); Denk, Rudolf, 82205 Gilching (DE)
(74) Vertreter: Cohausz & Florack

(56) Entgegenhaltungen:
- EP-A- 0 548 859
- EP-A- 0 601 763
- EP-A- 0 679 815
- EP-A- 0 839 681
- DE-A- 4 142 325
- H. GRÄFEN: "VDI-Lexikon Werkstofftechnik" 1993, VDI-VERLAG GMBH , DÜSSELDORF * Seite 18 - Seite 21 *

## Beschreibung

Die Erfindung betrifft eine aus einer Aluminiumlegierung bestehende Gelenkwelle für Kraftfahrzeuge und außerdem befaßt sich die Erfindung mit einem Verfahren zur Herstellung einer längsnahtgeschweißten, aus einer Aluminiumlegierung bestehenden Gelenkwelle für Kraftfahrzeuge.

Als Gelenkwellen für Kraftfahrzeuge werden üblicherweise Rohre verwendet, und es ist bekannt, diese Rohre entweder aus Stahl oder aus Aluminium herzustellen.

Sofern für die Gelenkwellen Stahlrohre zum Einsatz kommen, sind diese längsnahtgeschweißt. Zwar lassen sich mit längsnahtgeschweißten Stahlrohren grundsätzlich die an eine Gelenkwelle zu stellenden Anforderungen insbesondere hinsichtlich ihrer dynamischen Eigenschaften zufriedenstellend erfüllen, jedoch ist es von Nachteil, daß die Stahlrohre im Vergleich zu Rohren aus Aluminium ein relativ großes Gewicht besitzen. Deshalb ist man dazu übergegangen, Rohre aus Aluminium einzusetzen, die wesentlich leichter sind. Die Gewichtsersparnis bei Aluminiumrohren liegt gegenüber Stahlrohren bei etwa 30 %.

Der Wunsch nach einem geringen Gewicht ist vor dem Hintergrund zu sehen, daß beim Bau von Kraftfahrzeugen generell die Tendenz zur Gewichtseinsparung insbesondere auch bei dynamisch belasteten Teilen besteht, weil dann auch die weiteren Bestandteile, beispielsweise die Lager, kostengünstiger ausgelegt und dimensioniert werden können. Hinzu kommt noch, daß ein geringeres Gewicht bei einem Kraftfahrzeug auch einen geringeren Kraftstoffverbrauch ermöglicht.

Die bekannten Gelenkwellen aus Aluminium sind durch stranggepreßte Halbzeuge gebildet. Wegen der bei Gelenkwellen allgemein geforderten Genauigkeit müssen die bekannten Aluminiumrohre gezogen werden, was jedoch mit einem erheblichen Aufwand und mit erheblichen Kosten verbunden ist.

Bei Gelenkwellen für Kraftfahrzeuge stehen insbesondere die dynamischen Eigenschaften im Vordergrund, was zu der Forderung einer hohen Genauigkeit im Hinblick auf die Einhaltung des Außendurchmessers und auch im Hinblick auf eine konstante Wandstärke des Aluminiumrohres führt. Wegen der hohen Drehzahl bei Gelenkwellen ist es erforderlich, sehr enge Toleranzen einzuhalten, um einen sicheren Gleichauf zu gewährleisten. Deshalb kann es sogar erforderlich sein, bei nicht exakt gefertigten Gelenkwellen aus stranggepreßten Aluminiumrohren Ausgleichsgewichtstücke an bestimmten Stellen auf das Rohr zu schweißen, um im Sinne einer Auswuchtung den geforderten Gleichlauf bzw. die erforderlichen dynamischen Eigenschaften der Gelenkwelle zu gewährleisten. Daneben ist die Herstellung stranggepreßter Alumiumrohre mit den bei Gelenkwellen allgemein geforderten relativ geringen Wandstärken mit einem hohen fertigungstechnischen Aufwand verbunden. Stranggepreßte Rohre müssen kalt nachgezogen und rollgerichtet werden, um die geforderte Genauigkeit bzw. Maßhaltigkeit zu erzielen. Trotz dieser aufwendigen und teuren Maßnahmen werden die geforderten geringen Toleranzen und die hohen Genauigkeiten nicht immer erreicht.

Neben den stranggepreßten Aluminiumrohren sind allgemein auch schon längsnahtgeschweißte Rohre aus Aluminiumlegierungen bekannt. In der deutschen Offenlegungsschrift DE 41 42 325 A1 ist ein Verfahren zum Herstellen von Fahrwerksträgern für Fahrzeuge, insbesondere Personenkraftwagen, aus Aluminiumlegierungen beschrieben. Dabei wird davon ausgegangen, daß in den Fällen, in denen die bisherigen stranggepreßten Aluminiumrohre zu Fahrwerksteilen von Kraftfahrzeugen verarbeitet werden, eine Vielzahl von Umformungsschritten notwendig ist, zu denen auch das Hydroumformen oder Innenhochdruckumformverfahren zählt. In der DE 41 42 325 A1 ist beschrieben, daß den bekannten stranggepreßten Aluminiumrohren der Nachteil anhaftet, daß eine Hydroumformung bei vorangegangenen anderen Umformungen nicht möglich ist, da das Umformungsvermögen des Werkstoffes aufgrund der vorangegangenen Umformungen erschöpft ist. Auch ist es nicht möglich, vor dem Hydroumformen zwischenzuglühen, da der Werkstoff entweder aushärtet oder zu weich ist und somit seine Festigkeit verloren hat.

Um vor diesem Hintergrund gleichwohl ein Ausgangsmaterial zum Herstellen von Fahrwerksträgern aus Aluminiumlegierungen zu finden, mit welchem die erforderlichen Umformungsschritte problemlos durchgeführt werden können, ist in der genannten Offenlegungsschrift DE 41 42 325 A1 ein Verfahren vorgeschlagen, bei welchem als Rohlinge längsnahtgeschweißte Rohre aus einer naturharten oder aushärtbaren Aluminiumlegierung verwendet werden. Demgegenüber befaßt sich die vorliegende Erfindung jedoch nicht mit der Problematik, eine Vielzahl von Umformungsschritten zu ermöglichen sowie ein Zwischenglühen vor dem Hydroumformen vorzusehen. Aus der EP 0 548 859 A, die die DE 41 42 325 A1 als Priorität benennt, ist es darüberhinaus bekannt, als Rohlinge für Fahrwerksteile, u.a. Gelenkwellen, ohne Zusatzwerkstoffe längsnahtgeschweißte Rohre aus einer naturharten Aluminium legierung von mindestens 2,5 mm Wandstärke zu verwenden.

Im Zusammenhang mit einer aus einem Aluminiumrohr bestehenden Gelenkwelle für Kraftfahrzeuge ist es durch das deutsche Patent DE 44 14 710 C1 auch schon bekannt, ein längsnahtgeschweißtes Rohr zu verwenden, welches aus einer naturharten Legierung besteht, wobei das Rohr ohne Zusatzwerkstoffe längsnahtgeschweißt ist und die Wandstärke des Rohres größer als 2 mm ist. Dabei besteht das längsnahtgeschweißte Rohr aus einer AlMgMn-Legierung.

Zwar besitzt die bekannte Gelenkwelle aus einer naturharten Aluminiumlegierung deutliche Vorteile gegenüber den stranggepreßten Aluminiumrohren, jedoch hat sich in der Praxis gezeigt, daß gleichwohl die Gelenkwellen aus einer naturharten Aluminiumlegierung in Form eines längsnahtgeschweißten Rohres noch verbesserungsbedürftig sind. Dies ist darauf zurückzuführen, daß die Festigkeit der naturharten Legierung begrenzt ist. Für Anwendungsfälle mit Betriebstemperaturen im Bereich von etwa 80 - 150° C können nur Legierungen mit einem Mg-Gehalt von kleiner als 3 % verwendet werden. Andernfalls wird der Werkstoff sensibel gegen interkristalline Korrosion. Dies wurde als ein Problem bei naturharten Legierungen erkannt, die so durch Lochfraß unbrauchbar werden können.

Diesen Nachteilen tritt die Erfindung durch eine Gelenkwelle mit den Merkmalen des Patentanspruchs 1 entgegen.

In neuartiger Weise sieht die Erfindung bei einer Gelenkwelle in Form eines ohne Zusatzwerkstoffe längsnahtgeschweißten Rohres aus einer Aluminiumlegierung vor, daß die Gelenkwelle aus einer aushärtbaren Aluminiumlegierung besteht, und daß die Wanddicke des Rohres größer oder gleich 1 mm ist, wobei eine Legierung auf der Basis AlMgSi (6000-Legierung) oder eine 7000-Legierung verwendet wird. Bei der Erfindung erreichen die längsnahtgeschweißten Rohre nach einem Aushärtevorgang eine gegenüber naturharten Aluminiumlegierungen deutlich höhere und bessere Festigkeit bzw. bessere und höhere Streckgrenze. Da bei längsnahtgeschweißten Rohren die Maßhaltigkeit im Hinblick auf die Wanddicke, die Rundheit und die Geradheit sehr hoch liegt, ist kein Kaltnachziehen und Rollrichten erforderlich. Dies führt zu einer großen Einsparung bei eventuell benötigten Ausgleichsgewichten, denn jede Gelenkwelle wird vor Inbetriebnahme ausgewuchtet.

Durch die DE 35 10 091 A1 ist zwar eine Antriebswelle für Fahrzeuge bekannt, die als Rohr mit einem ersten und einem zweiten Ende ausgebildet ist und aus einer aushärtbaren Aluminiumlegierung besteht. Das Rohr hat einen im wesentlichen konstanten Außendurchmesser über seine Länge und über den größten Teil seiner Länge eine konstante Wanddicke. Ferner weist das Rohr eine höhere Wanddicke angrenzend an jedes seiner Enden auf, und in die Enden des Rohres sind Anschlußteile aus einer Aluminiumlegierung eingesetzt und mit den Enden durch Schweißen verbunden. Dabei sind jedoch längsnahtgeschweißte Aluminiumrohre nicht erwähnt und beschrieben.

Schließlich ist es aus der EP 0 839 681 A bekannt, ein stranggepreßtes oder Längsnahtgeschweißtes Rohr aus einer naturharten oder aushärtbaren Aluminiumlegierung für eine Gelenkwelle zu rerwenden.

In einer vorteilhaften Ausgestaltung der Erfindung ist vorgesehen, daß die Wanddicke des Rohres kleiner oder gleich 2 mm ist. Es hat sich gezeigt, daß mit diesen Werten der Wanddicke die geforderten engen Toleranzen sehr gut einzuhalten sind, um einen sicheren Gleichlauf der Gelenkwelle zu gewährleisten.

Um die durch die Erfindung erhöhte Festigkeit zu erreichen, ist in einer zweckmäßigen Ausgestaltung der Erfindung vorgesehen, daß die aushärtbare Aluminiumlegierung vor dem Schweißvorgang einem Lösungsglühen und anschließendem Abschrecken unterzogen ist.

Gemäß einer anderen vorteilhaften Ausgestaltung der Erfindung ist die aushärtbare Aluminiumlegierung noch einer anschließenden Warmauslagerung unterzogen.

Schließlich sieht eine weitere zweckmäßige Ausgestaltung der Erfindung vor, daß die aushärtbare Aluminiumlegierung vor dem Schweißvorgang einem Lösungsglühen und anschließendem Abschrecken sowie einer anschließenden Warmauslagerung unterzogen ist, und daß die Gelenkwelle nach dem Schweißvorgang einer weiteren Warmauslagerung ausgesetzt ist.

Eine weitere vorteilhafte Ausgestaltung der Erfindung sieht vor, daß die Schweißnaht des Rohres eine Nahtüberhöhung mit einer Toleranz von 0,2 mm aufweist. Die Streckgrenze des Rohres ist größer als 240 N/mm².

Durch die Erfindung wird außerdem ein Verfahren zur Herstellung einer längsnahtgeschweißten, aus einer Aluminiumlegierung bestehenden Gelenkwelle für Kraftfahrzeuge geschaffen, welches durch die Merkmale des Patentanspruchs 7 gekennzeichnet ist.

Bei diesem erfindungsgemäßen Verfahren wird zunächst ein flacher länglicher Basiskörper aus einer aushärtbaren Aluminiumlegierung auf der Basis AlMgSi einem Lösungsglühen unterworfen. Anschließend wird der Basiskörper abgeschreckt und kalt zu einem Rohrkörper verformt.

Aus dem Rohrkörper wird durch Längsnahtschweißen in Form eines Hochfrequenzinduktions-Schweißens (HFI-Schweißen) ein Rohr hergestellt, welches die Gelenkwelle bildet.

Eine vorteilhafte Weiterbildung des Verfahrens besteht darin, daß der Basiskörper nach dem Abschrecken und vor der kalten Verformung zu einem Rohrkörper einer Warmauslagerung ausgesetzt wird.

Eine andere zweckmäßige Ausgestaltung des erfindungsgemäßen Verfahrens sieht vor, daß das längsnahtgeschweißte Rohr nach dem Schweißvorgang einer weiteren Warmauslagerung ausgesetzt wird.

Die bei der Erfindung in neuartiger Weise vorgesehene Verwendung einer aushärtbaren Aluminiumlegierung führt neben der höheren Festigkeit auch dazu, daß die nachteilige interkristalline Korrosion mit den Folgen von Lochfraß vermieden ist. Weitere Vorteile bestehen in der hohen Wirtschaftlichkeit bei der Herstellung sowie in der großen Maßhaltigkeit und Maßgenauigkeit, insbesondere gegenüber gepreßten Rohren. Im Hinblick auf die Festigkeit ist noch besonders hervorzuheben, daß ein großer Wert trotz der geringen Wanddicke des längsnahtgeschweißten Rohres erzielt werden kann.

## Patentansprüche

1. Gelenkwelle für Kraftfahrzeuge, wobei die Gelenkwelle ein ohne Zusatzwerkstoffe längsnahtgeschweißtes Rohr aus einer Aluminiumlegierung ist, wobei die Gelenkwelle aus einer aushärtbaren Aluminiumlegierung besteht, die Wanddicke des Rohres größer oder gleich 1 mm ist und die aushärtbare Aluminiumlegierung eine Legierung auf der Basis AlMgSi oder eine 7000-Legierung ist.

2. Gelenkwelle nach Anspruch 1, **dadurch gekennzeichnet, daß** die Wanddicke des Rohres kleiner oder gleich 2 mm ist.

3. Gelenkwelle nach einem der vorhergehenden Ansprüche 1 oder 2, **dadurch gekennzeichnet, daß** die aushärtbare Aluminiumlegierung vor dem Schweißvorgang einem Lösungsglühen und anschließendem Abschrecken unterzogen ist.

4. Gelenkwelle nach einem der vorhergehenden Ansprüche 1 oder 2, **dadurch gekennzeichnet, daß** die aushärtbare Aluminiumlegierung vor dem Schweißvorgang einem Lösungsglühen und anschließendem Abschrecken sowie einer anschließenden Warmauslagerung unterzogen ist.

5. Gelenkwelle nach einem der vorhergehenden Ansprüche 1 oder 2,
**dadurch gekennzeichnet, daß** die aushärtbare Aluminiumlegierung vor dem Schweißvorgang einem Lösungsglühen und anschließendem Abschrecken sowie einer anschließenden Warmauslagerung unterzogen ist, und daß die Gelenkwelle nach dem Schweißvorgang einer weiteren Warmauslagerung ausgesetzt ist.

6. Gelenkwelle nach einem der vorhergehenden Ansprüche 1 - 5, **dadurch gekennzeichnet, daß** die Schweißnaht des Rohres eine Nahtüberhöhung mit einer Toleranz von 0,2 mm aufweist.

7. Verfahren zur Herstellung einer längsnahtgeschweißten, aus einer Aluminiumlegierung bestehenden Gelenkwelle für Kraftfahrzeuge, aufweisend folgende Verfahrensschritte:
a) ein flacher länglicher Basiskörper aus einer aushärtbaren Aluminiumlegierung auf der Basis AlMgSi wird einem Lösungsglühen unterworfen,
b) der Basiskörper wird abgeschreckt,
c) der Basiskörper wird kalt zu einem Rohrkörper verformt,
d) aus dem Rohrkörper wird durch Längsnahtschweißen in Form eines Hochfrequenzinduktions-Schweißens (HFI-Schweißen) ein Rohr hergestellt.

8. Verfahren nach Anspruch 7, **dadurch gekennzeichnet, daß** der Basiskörper nach dem Abschrecken und vor der kalten Verformung zu einem Rohrkörper einer Warmauslagerung ausgesetzt wird.

9. Verfahren nach Anspruch 7 oder 8, **dadurch gekennzeichnet, daß** das längsnahtgeschweißte Rohr nach dem Schweißvorgang einer weiteren Warmauslagerung ausgesetzt wird.

## Claims

1. Vehicle propeller shaft, wherein the propeller shaft is a tube of an aluminium alloy with a longitudinal welded seam without additives, wherein the propeller shaft is made from a hardenable aluminium alloy, the tube wall thickness is more than or equal to 1 mm and the hardenable aluminium alloy is an alloy based upon AlMgSi or a 7000 alloy.

2. Propeller shaft according to Claim 1, **characterized in that** the tube wall thickness is less than or equal to 2 mm.

3. Propeller shaft according to either of preceding Claims 1 and 2, **characterized in that** before welding the hardenable aluminium alloy is subjected to a solution annealing followed by quenching.

4. Propeller shaft according to either of preceding Claims 1 and 2, **characterized in that** before welding the hardenable aluminium alloy is subjected to a solution annealing followed by quenching followed by a heated dwell time.

5. Propeller shaft, according to either of preceding Claims 1 and 2, **characterized in that** before welding the hardenable aluminium alloy is subjected to a solution annealing followed by quenching followed by a heated dwell time, and **in that** after welding the propeller shaft is exposed to a further heated dwell time.

6. Propeller shaft according to any one of preceding Claims 1 - 5, **characterized in that** the welded seam of the tube comprises a reinforcement with a tolerance of 0.2 mm.

7. Method for producing a longitudinal welded vehicle propeller shaft consisting of an aluminium alloy, comprising the following process steps:
a) a flat oblong blank made from a hardenable aluminium alloy based upon AlMgSi is subjected to a solution annealing,
b) the blank is quenched,
c) the blank is cold-drawn into a tubular blank,
d) a tube is produced from the tubular blank by longitudinal welding in the form of high frequency induction (HFI) welding.

8. Method according to Claim 7, **characterized in that** the blank is exposed to a heated dwell time after quenching and before being cold-drawn into a tubular blank.

9. Method according to Claim 7 or 8, **characterized in that** after welding the longitudinal welded tube is exposed to a further heated dwell time.

## Revendications

1. Arbre articulé pour véhicules automobiles, l'arbre articulé étant un tube à soudure longitudinale sans matières d'apport, en un alliage d'aluminium, l'arbre articulé étant constitué d'un alliage d'aluminium durcissable, l'épaisseur de la paroi du tube étant supérieure ou égale à 1 mm et l'alliage d'aluminium durcissable étant un alliage à base de AlMgSi ou un alliage 7000.

2. Arbre articulé selon la revendication 1, **caractérisé en ce que** l'épaisseur de la paroi du tube est inférieure ou égale à 2 mm.

3. Arbre articulé selon l'une quelconque des revendications précédentes 1 ou 2, **caractérisé en ce que** l'alliage d'aluminium durcissable est soumis, avant l'opération de soudage, à un recuit de mise en solution suivi d'une trempe.

4. Arbre articulé selon l'une quelconque des revendications précédentes 1 ou 2, **caractérisé en ce que** l'alliage d'aluminium durcissable est soumis, avant l'opération de soudage, à un recuit de mise en solution puis à une trempe ainsi qu'à un durcissement secondaire à chaud consécutif.

5. Arbre articulé selon l'une quelconque des revendications précédentes 1 ou 2, **caractérisé en ce que** l'alliage d'aluminium durcissable est soumis, avant l'opération de soudage, à un recuit de mise en solution suivi d'une trempe ainsi qu'à un durcissement secondaire à chaud consécutif, et **en ce que** l'arbre articulé est soumis, après l'opération de soudage, à un durcissement secondaire à chaud complémentaire.

6. Arbre articulé selon l'une quelconque des revendications précédentes 1 à 5, **caractérisé en ce que** le cordon de soudure du tube présente une surépaisseur de la soudure avec une tolérance de 0,2 mm.

7. Procédé de fabrication d'un arbre articulé à soudure longitudinale, constitué d'un alliage d'aluminium, pour véhicules automobiles, comportant les étapes de procédé suivantes :
a) un corps de base plat et allongé en un alliage d'aluminium durcissable à base de AlMgSi est soumis à un recuit de mise en solution,
b) le corps de base est trempé,
c) le corps de base est déformé à froid en un corps tubulaire,
d) à partir du corps tubulaire, par soudage d'un cordon longitudinal sous la forme d'un soudage à induction à haute fréquence (soudage HFI), il est réalisé un tube.

8. Procédé selon la revendication 7, **caractérisé en ce qu'**après la trempe et avant la déformation à froid en un corps tubulaire, le corps de base est soumis à un durcissement secondaire à chaud.

9. Procédé selon l'une quelconque des revendications 7 ou 8, **caractérisé en ce que** le tube à soudure longitudinale est soumis, après l'opération de soudage, à un durcissement secondaire à chaud complémentaire.
